# EUROPÄISCHE PATENTANMELDUNG

(11) **EP 4 840 829 A1**
(43) Veröffentlichungstag der Anmeldung: **18.11.2026**
(21) Anmeldenummer: 26168010.2
(22) Anmeldetag: 26.03.2026
(51) Int. Cl.: C02F 1/68, C02F 1/76, C02F 1/72

(54) **SYSTEM UND VERFAHREN ZUR WASSERVERTEILUNG**

(30) Priorität: 13.05.2025 DE 202025102628 U
(71) Anmelder: Scheideler Verfahrenstechnik GmbH, 45721 Haltern am See (DE)
(72) Erfinder: SCHEIDELER, Michael, 45721 Haltern am See (DE)
(74) Vertreter: Andrejewski - Honke Patent- und Rechtsanwälte Partnerschaft mbB

(57) **Zusammenfassung**

Die Erfindung betrifft ein System zur Wasserverteilung. Das System weist zumindestzwei mobile Moduleinheiten auf. Die zumindest zwei Moduleinheiten weisen jeweils ein Transportgestell auf. Die Komponenten der Moduleinheiten sind jeweils in dem Transportgestell angeordnet. Eine erste Moduleinheit ist als Dosier-Moduleinheitausgebildetund weist zumindest eine Dosieranlage für die Zufuhr von zumindest einem Dosiermittel zu Wasser auf, das die Dosieranlage durchströmt. Die Dosieranlage weist zumindest einen Wasserzuführungseingang, zumindest eine Wasserbehandlungsleitung, zumindest einen Vorratsbehälter für das Dosiermittel, zumindest eine Zugabestelle für das Dosiermittel und zumindest einen Wasserabführungsausgang aufweist. Eine zweite Moduleinheit ist als Verteil-Moduleinheit ausgebildet und weist zumindest eine Verteileinrichtung für das in der Dosieranlage behandelte Wasser auf. Die Verteileinrichtung (12) weist zumindest einen Wassereingang (13) und zumindest einen Wasserabgang (14) auf. Der Wasserabführungsausgang (11) der Dosieranlage (5) ist mit dem Wassereingang (13) der Verteileinrichtung (12) verbindbar.

## Beschreibung

Die Erfindung betrifft ein System zur Wasserverteilung, insbesondere zur Trinkwasserverteilung. Das erfindungsgemäße System dient insbesondere zur Zuführung zumindest eines Dosiermittels, insbesondere eines Desinfektionsmittels, zu Wasser und zurVerteilung des entsprechend behandelten Wassers. Das Dosiermittel, insbesondere das Desinfektionsmittel, wird dem Wasser bevorzugt zur Aufbereitung zudosiert.

Aus der Praxis sind Systeme zur Wasserverteilung bzw. zur Trinkwasserverteilung grundsätzlich bekannt. Die aus der Praxis bekannten Systeme sind aber üblicherweise aufwendig ausgestaltet und insbesondere nur wenig flexibel einsetzbar. Mit den bekannten Systemen ist es beispielsweise nicht problemlos möglich, eine Not-Wasserversorgung zu realisieren. Not-Wasserversorgungen sind etwa notwendig, wenn die reguläre Wasserversorgung von Verbrauchern bzw. Haushalten unterbrochen ist. Im Rahmen einer Not-Wasserversorgung muss aus einer Wasserquelle - beispielsweise aus einem Fluss, aus einem Brunnen oder aus großen Speichern -schnell und flexibel Wasser entnommen und aufbereitet werden und anschließend an Verbraucher, beispielsweise an Haushalte, verteilt werden. Diese Maßnahmen müssen üblicherweise in kurzer Zeit umgesetzt werden, sodass es wünschenswert ist, dass die Systeme schnell und flexibel einsetzbar sind. Allerdings sind die aus der Praxis bekannten Systeme für derartige Anwendungen oftmals zu aufwendig ausgestaltet und zu wenig flexibel. Sie können beispielsweise keine ausreichende Anzahl an Abfüllstationen für Transportfahrzeuge bzw. Anschlussstellen für Verbraucher zur Verfügung stellen und/oder nicht die benötigte Menge an Wasser bzw. Trinkwasser bereitstellen.

Darüber hinaus ist es für eine Not-Wasserversorgung erforderlich, dass die Systeme zur Wasserverteilung unproblematisch an die Gegebenheiten am Einsatzort und an die zur Verfügung stehende Wasserquelle anpassbar sind. - Hier setzt die Erfindung ein.

Demgegenüber liegt der Erfindung das technische Problem zugrunde, ein System zur Wasserverteilung, insbesondere zur Trinkwasserverteilung, der eingangs genannten Art anzugeben, mit dem die vorstehend beschriebenen Nachteile effektiv und funktionssicher vermieden werden können, das insbesondere sehr flexibel einsetzbar ist und das vorzugsweise eine ausreichende Menge an Abfüllstationen für Transportfahrzeuge und/oder Anschlussstellen für Verbraucher und/oder eine ausreichende Wassermenge bzw. Trinkwassermenge bereitstellen kann.

Zur Lösung dieses technischen Problems lehrt die Erfindung ein System zur Wasserverteilung, insbesondere zur Trinkwasserverteilung, wobei das System zumindest zwei mobile Moduleinheiten aufweist, wobei die zumindest zwei Moduleinheiten jeweils ein Transportgestell aufweisen, wobei die Komponenten der Moduleinheiten jeweils in dem Transportgestell angeordnet sind,
wobei eine erste Moduleinheit als Dosier-Moduleinheit ausgebildet ist und eine Dosieranlage für die Zufuhr von zumindest einem Dosiermittel zu Wasser aufweist, das die Dosieranlage durchströmt, wobei die Dosieranlage zumindest einen Wasserzuführungseingang, zumindest eine Wasserbehandlungsleitung, vorzugsweise zumindest eine Dosierpumpe, zumindest einen Vorratsbehälter für das Dosiermittel, zumindest eine Zugabestelle für das Dosiermittel und zumindest einen Wasserabführungsausgang aufweist,
wobei eine zweite Moduleinheit als Verteil-Moduleinheit ausgebildet ist und zumindest eine Verteileinrichtung für das in der Dosieranlage behandelte Wasser aufweist, wobei die Verteileinrichtung zumindest einen Wassereingang und zumindesteinen, vorzugsweise zumindest zwei, bevorzugt zumindest drei, Wasserabgänge aufweist und wobei der Wasserabführungsausgang der Dosieranlage mit dem Wassereingang der Verteileinrichtung verbindbar ist.

Bevorzugt ist das erfindungsgemäße System ein modulares System zur Wasserverteilung, insbesondere zur Trinkwasserverteilung. Bei dem erfindungsgemäßen System handelt es sich somit insbesondere um ein modulares System zur Wasserverteilung, das zumindest zwei mobile Moduleinheiten umfasst. Bei dem Wasser handelt es sich vorzugsweise um Trinkwasser. Mit dem Ausdruck mobile Moduleinheit ist im Rahmen der Erfindung insbesondere gemeint, dass die Moduleinheiten transportabel sind und auf Transportfahrzeugen an einen Einsatzort transportierbar sind. Hier und nachfolgend wird anstelle des Ausdruckes mobile Moduleinheit insbesondere auch einfach der Ausdruck Moduleinheit verwendet. Der Ausdruck modulares System meint im Rahmen der Erfindung insbesondere, dass das System aus einzelnen mobilen Moduleinheiten ausgebildet ist, die - vorzugsweise gestapelt - zu einem Einsatzort transportiert werden können. An diesem Einsatzort kann aus den einzelnen mobilen Moduleinheiten - insbesondere in Abhängigkeit von den Gegebenheiten am Einsatzort und/oder der benötigten Wassermenge - das erfindungsgemäße System zur Wasserverteilung, insbesondere zur Trinkwasserverteilung, in einen Betriebszustand versetzt werden.

Bevorzugt sind die mobilen Moduleinheiten des erfindungsgemäßen Systems stapelbar. Die Moduleinheiten können beispielsweise auf einem Transportfahrzeug gestapelt und zu dem Einsatzort transportiert werden, beispielsweise auf einem von einem Kraftfahrzeug ziehbaren Anhänger oder auf einem LKW.

Es ist weiter bevorzugt, dass die mobilen Moduleinheiten am Einsatzort von einem Gabelstapler und/oder einem Kran verfahren werden können. Um das erfindungsgemäße System an dem Einsatzort in einen Betriebszustand zu versetzen, wird die zumindest eine Dosier-Moduleinheit bevorzugt mit der zumindest einen Verteil-Moduleinheit verbunden und insbesondere wird der Wasserabführungsausgang der Dosieranlege der Dosier-Moduleinheit mit dem Wassereingang der Verteileinrichtung der Verteil-Moduleinheit verbunden. Außerdem wird bevorzugt der Wasserzuführungseingang der Dosieranlage der Dosier-Moduleinheit mit einer Wasserquelle verbunden und sehr bevorzugt wird eine Förderpumpe zwischen der Wasserquelle und dem erfindungsgemäßen System bzw. der Dosier-Moduleinheit angeordnet.

Das erfindungsgemäße System zur Wasserverteilung weist gemäß einer bevorzugten Ausführungsform weitere mobile Moduleinheiten auf, die entweder mit den übrigen Moduleinheiten des Systems verbunden werden oder auf denen Komponenten vorgehalten werden, mit denen das System in einen Betriebszustand versetzt werden kann und/oder mit denen das System gewartet werden kann. Das wird unten stehend noch näher erläutert. Das System kann gemäß bevorzugter Ausführungsform zumindest drei, bevorzugt zumindest vier, sehr bevorzugt zumindest fünf, weiter bevorzugt zumindest sechs, mobile Moduleinheiten aufweisen. In Abhängigkeit von den Gegebenheiten am Einsatzort und die Anforderungen an die Wasserversorgung können zweckmäßigerweise die einzelnen (zusätzlichen) Moduleinheiten ausgewählt und verwendet werden.

Das erfindungsgemäße System zur Wasserverteilung umfasst eine erste Moduleinheit in Form einer Dosier-Moduleinheit, die eine Dosieranlage für die Zufuhr von zumindest einem Dosiermittel zu Wasser aufweist, das die Dosieranlage durchströmt. Bei dem die Dosieranlage durchströmenden Wasser handelt es sich insbesondere um aus einer Wasserquelle entnommenes und durch den Wasserzuführungseingang der Dosieranlage zugeführtes Wasser bzw. Trinkwasser, das in der Dosieranlage behandelt und anschließend mittels der Verteileinrichtung der Verteil-Moduleinheit verteilt wird. Für die Behandlung des Wassers, insbesondere des Trinkwassers, weist die Dosieranlage zumindest eine - dem Wasserzuführungseingang in Wasserströmungsrichtung insbesondere nachgeschaltete - Wasserbehandlungsleitung, vorzugsweise zumindest eine Dosierpumpe, zumindest einen Vorratsbehälter für das Dosiermittel und zumindesteine Zugabestelle fürdas Dosiermittel auf. Darüber hinaus ist zumindest ein Wasserabführungsausgang für die Abführung des entsprechend behandelten Wassers bzw. Trinkwassers vorgesehen. Mittels der bevorzugt vorgesehenen Dosierpumpe wird zweckmäßigerweise das in dem Vorratsbehälter vorgehaltene Dosiermittel zu der Zugabestelle gefördert. Grundsätzlich kann die Förderung des Dosiermittels aber auch anderweitig realisiert werden, beispielsweise mittels eines von dem Wasserstrom erzeugten Unterdruckes. Die Zugabestelle ist vorzugsweise an bzw. in der Wasserbehandlungsleitung angeordnet. Zweckmäßigerweise weist die Zugabestelle einen Zugabehahn, insbesondere einen Zugabekugelhahn, und/oder ein Zugabelanze auf, wobei die Zugabelanze sehr bevorzugt in die Wasserbehandlungsleitung hineinreicht. Auf diese Weise kann das Dosiermittel unmittelbar in den die Wasserbehandlungsleitung durchströmenden Wasserstrom zudosiert werden.

Erfindungsgemäß ist außerdem eine zweite Moduleinheit in Form einer Verteil-Moduleinheit vorgesehen. Die Verteil-Moduleinheit weist zumindest eine Verteileinrichtung für das in der Dosieranlage behandelte Wasser auf. Im Betriebszustand des erfindungsgemäßen Systems ist vorzugsweise der Wasserabführungsausgang der Dosieranlage mit dem Wassereingang der Verteileinrichtung verbunden, sodass das in der Dosieranlage behandelte Wasser in die Verteileinrichtung strömen kann. Für die Verbindung ist insbesondere ein Rohrverbindungsstück vorgesehen. Die Verteileinrichtung weist erfindungsgemäß zumindest einen, vorzugsweise zumindest zwei, bevorzugt zumindestdrei Wasserabgänge auf. Grundsätzlich können auch zumindestvier, insbesondere zumindest fünf, Wasserabgänge vorhanden sein.

An die Wasserabgänge der Verteileinrichtung sind gemäß einer bevorzugten Ausführungsform Verteilelemente, insbesondere Verteilschläuche, anschließbar. Die Verteilelemente, insbesondere die Verteilschläuche, können das Wasser bzw. Trinkwasser zu Verbrauchern leiten und/oder können als Abfüllstationen für Transportfahrzeuge dienen, die das Wasser anschließend weiter verteilen. Es ist auch möglich, dass an die Wasserabgänge jeweils eine weitere Verteil-Moduleinheit zur weiteren Verteilung des Wassers bzw. Trinkwassers angeschlossen wird. Das wird unten stehend noch näher erläutert.

Erfindungsgemäß weisen die zumindest zwei Moduleinheiten jeweils ein Transportgestell auf, in dem die Komponenten der Moduleinheiten angeordnet sind. Bei dem Transportgestell kann es sich gemäß einer bevorzugten Ausführungsform um einen Transportrahmen handeln, in dem die Komponenten der jeweiligen Moduleinheit angeordnet werden können. Gemäß einer weiteren Ausführungsform kann es sich bei dem Transportgestell um eine Gitterbox handeln.

Die Erfindung hat erkannt, dass sich das erfindungsgemäße System zur Wasserverteilung aufgrund der Ausgestaltung aus einzelnen, mobilen Moduleinheiten sehr flexibel einsetzen lässt. Die mobilen Moduleinheiten sind bevorzugt stapelbar und somit sehr funktionssicher zu verschiedenen Einsatzorten transportierbar und an den Einsatzorten auch sehr flexibel handhabbar. Darüber hinaus ist zu betonen, dass das erfindungsgemäße System zur Wasserverteilung aufgrund seiner Modularität sehr funktionssicher an die Gegebenheiten verschiedener Einsatzorte und Wasserquellen und auch an die erforderliche Wassermenge anpassbar ist. Mit der erfindungsgemäßen Dosier-Moduleinheit ist es möglich, ein Dosiermittel, insbesondere ein Desinfektionsmittel, sehr funktionssicher zu dem Wasser hinzuzugeben und auf diese Weise auch eine funktionssichere und rasche Aufbereitung des Wassers bzw. Trinkwassers sicherzustellen. Die Modularität des erfindungsgemäßen Systems ermöglicht es außerdem, eine entsprechend den Anforderungen bzw. Gegebenheiten problemlos einstellbare Anzahl an Abfüllstationen bzw. Anschlussstellen bereitzustellen.

Eine besonders bevorzugte Ausführungsformdes erfindungsgemäßen Systems ist dadurch gekennzeichnet, dass das Dosiermittel ein Desinfektionsmittel ist und dass das Dosiermittel bzw. das Desinfektionsmittel bevorzugt zumindest eine aus der Gruppe: "Natriumhypochlorit, Calciumhypochlorit, Wasserstoffperoxid, Chlordioxid" ausgewählte Verbindung enthält. Es ist zusätzlich oder alternativ möglich, dass als Dosiermittel das Neutralisationsmittel Natriumthiosulfat verwendet wird. Es ist bevorzugt, ein chemisches Oxidationsmittel als Dosiermittel einzusetzen, das vorzugsweise der Desinfektion des Wassers bzw. des Trinkwassers dient. Oxidationsmittel meint dabei insbesondere ein Peroxid und/oder eine Halogen-Sauerstoff-Verbindung. Gemäß einer bevorzugten Ausführungsform enthält das Dosiermittel, insbesondere das Desinfektionsmittel, zumindest ein Hypochlorit und weiter bevorzugt ist das Dosiermittel, insbesondere das Desinfektionsmittel, zumindest ein Hypochlorit. Bei dem Hypochlorit handelt es sich bevorzugt um Natriumhypochlorit und/oder Calciumhypochlorit.

Es ist sehr bevorzugt, dass die Transportgestelle der zumindest zwei Moduleinheiten stapelbar sind. Gemäß einer bevorzugten Ausführungsform sind alle Transportgestelle der Moduleinheiten des erfindungsgemäßen Systems stapelbar. Stapelbar meint im Rahmen der Erfindung insbesondere, dass die Transportgestelle übereinander angeordnet werden können und dass insbesondere mehrere Transportgestelle übereinander angeordnet und gemeinsam transportiert werden können, beispielsweise von einem Gabelstapler und/oder auf einem Transportfahrzeug. Dieser Ausführungsform liegt die Erkenntnis zugrunde, dass die Flexibilität des erfindungsgemäßen Systems durch die Stapelbarkeit der Transportgestelle weiter erhöht wird und dass die Moduleinheiten des Systems funktionssicher und wenig aufwendig transportiert werden können und am Einsatzort gehandhabt werden können. Auch der Abbau und der Abtransport des erfindungsgemäßen Systems wird durch die Stapelbarkeit der Transportgestelle der Moduleinheiten erheblich vereinfacht.

Es ist ganz besonders bevorzugt, dass die Transportgestelle der zumindest zwei Moduleinheiten in der Draufsicht rechteckig sind und bevorzugt jeweils die gleiche Höhe bzw. im Wesentlichen die gleiche Höhe und/oder die gleiche Breite bzw. im Wesentlichen die gleiche Breite und/oder die gleiche Länge bzw. im Wesentlichen die gleiche Länge aufweisen. Dieser Ausführungsform liegt die Erkenntnis zugrunde, dass sowohl der Transport als auch die Handhabung am Einsatzort weiter verbessert wird, wenn die Transportgestelle der zumindest zwei Moduleinheiten die gleiche Höhe und/oder die gleiche Breite und/oder die gleiche Länge aufweisen. Die Ausdrücke Höhe, Länge, Breite und dergleichen beziehen sich im Rahmen der Erfindung insbesondere auf den Aufstellzustand der Moduleinheiten, in dem die Moduleinheiten bzw. die Transportgestelle der Moduleinheiten auf einem Aufstelluntergrund aufgestellt sind. Höhe des Transportgestells meint im Rahmen der Erfindung insbesondere die Erstreckung des Transportgestells quer, insbesondere senkrecht bzw. im Wesentlichen senkrecht zu dem Aufstelluntergrund, also insbesondere in vertikaler Richtung. Länge des Transportgestells meint im Rahmen der Erfindung insbesondere die Erstreckung des Transportgestells in seiner Längsrichtung. Breite des Transportgestells meint im Rahmen der Erfindung insbesondere die Erstreckung des Transportgestells quer, insbesondere senkrecht bzw. im Wesentlichen senkrecht zu seiner Länge bzw. Längserstreckung und vorzugsweise quer, insbesondere senkrecht bzw. im Wesentlichen senkrecht zu der Höhe des Transportgestells.

Es ist sehr bevorzugt, dass zumindest ein Transportgestell, vorzugsweise die zumindest zwei bzw. alle Transportgestelle des Systems, eine Höhe und/oder eine Breite von 300 mm bis 1200 mm, vorzugsweise von 600 mm bis 1000 mm, bevorzugt von 700 mm bis 900 mm aufweist/aufweisen und/oder eine Länge von 600 mm bis 2000 mm, vorzugsweise von 800 mm bis 1600 mm, bevorzugt von 900 mm bis 1400 mm aufweist/aufweisen. Dieser Ausführungsform liegt die Erkenntnis zugrunde, dass die Transportgestelle bzw. die mobilen Moduleinheiten dann sehr kompakt ausgebildet sind und die flexible Einsetzbarkeit des Systems weiter verbessert wird.

Es ist bevorzugt, dass zumindest ein Transportgestell, vorzugsweise die zumindest zwei bzw. alle Transportgestelle des Systems, jeweils zumindest eine Befestigungsstrebe, vorzugsweise jeweils zumindest zwei Befestigungsstreben, für die Befestigung der Komponenten der zugeordneten Moduleinheit aufweist/aufweisen, wobei die zumindest eine Befestigungsstrebe sich bevorzugt in Horizontalrichtung erstreckt und insbesondere in einem dem Aufstelluntergrund zugeordneten unteren Abschnitt des Transportgestells angeordnet ist. Dass sich die zumindest eine Befestigungsstrebe in Horizontalrichtung erstreckt meint insbesondere, dass die Befestigungsstrebe parallel bzw. im Wesentlichen parallel zum Aufstelluntergrund angeordnet ist. An der zumindest einen Befestigungsstrebe können bevorzugt die Komponenten der zugeordneten Moduleinheit befestigt werden. Darüber hinaus istes möglich, dass an den Befestigungsstreben zusätzliche Haltekomponenten befestigt bzw. montiert werden, die dann die Komponenten der Moduleinheit aufnehmen.

Dass die zumindest eine Befestigungsstrebe in einem dem Aufstelluntergrund zugeordneten unteren Abschnitt des Transportgestells angeordnet ist, meint insbesondere, dass die Befestigungsstrebe im Hinblick auf die Höhe des Transportgestells in einem unteren Abschnitt angeordnet ist. Sehr bevorzugt ist die zumindest eine Befestigungsstrebe in einem Bereich zwischen 2 % und 30 % der Höhe, bevorzugt zwischen 3 % und 20 % der Höhe, sehr bevorzugt zwischen 5 % und 15 % der Höhe - ausgehend von dem unteren Ende des Transportgestells - angeordnet. Sehr bevorzugt sind zumindest zwei, weiter bevorzugt zumindest drei, ganz besonders bevorzugt zumindest vier, solcher Befestigungsstreben vorgesehen und es ist ganz besonders bevorzugt, dass die Befestigungsstreben parallel bzw. im Wesentlichen parallel zueinander angeordnet sind.

Gemäß einer bevorzugten Ausführungsform weist das Transportgestell zumindest vier, insbesondere vier, sich vertikal bzw. im Wesentlichen vertikal erstreckende Eckpfosten auf und sehr bevorzugt sind diese Eckpfosten in dem dem Aufstelluntergrund zugeordneten unteren Abschnitt des Transportgestells durch zwei Längsstreben, die sich in Längsrichtung erstrecken und/oder durch zwei Querstreben, die sich in Breitenrichtung erstrecken miteinander verbunden. Darüber hinaus sind die Eckpfosten gemäß bevorzugter Ausführungsform in einem oberen Abschnitt des Transportgestells, insbesondere am oberen Ende des Transportgestells, durch zwei Längsstreben, die sich in Längsrichtung erstrecken und/oder durch zwei Querstreben, die sich in Breitenrichtung erstrecken, miteinander verbunden. Oberer Abschnitt des Transportgestells meint dabei insbesondere einen im Hinblick auf die Höhe des Transportgestells oberen Abschnitt. Sehr bevorzugt meint oberer Abschnitt des Transportgestells einen Bereich zwischen 2 % und 30 % der Höhe, bevorzugt zwischen 3 % und 20 % der Höhe, sehr bevorzugt zwischen 5% und 15 % der Höhe ausgehend von dem oberen Ende des Transportgestells. Gemäß bevorzugter Ausführungsform ergeben sich zwei rechteckige Rahmen, die durch die vier Stützpfosten miteinander verbunden sind. Die zumindest eine Befestigungsstrebe verbindet gemäß bevorzugter Ausführungsform die beiden Längsstreben im unteren Abschnitt des Transportgestells bzw. des unteren Rechteckrahmens des Transportgestells und ist sehr bevorzugt parallel bzw. im Wesentlichen parallel zu den Querstreben angeordnet. Auf dem oberen Rechteckrahmen ist bevorzugt zumindest eine Halteumrandung angeordnet, die im Rahmen der Stapelung der Transportgestelle zur Aufnahme des oberhalb angeordneten weiteren Transportgestells dient, insbesondere zur Aufnahme der Stützpfosten bzw. der Enden der Stützpfosten des weiteren Transportgestells.

Das zumindest eine Transportgestell ist gemäß bevorzugter Ausführungsform aus Stahl, insbesondere aus Edelstahl, erzeugt. Bevorzugt besteht das Transportgestell aus - insbesondere gemäß oben stehend erläuterter Anordnung - miteinander verbundenen Stahl-Vierkantrohren bzw. Edelstahl-Vierkantrohren.

Eine ganz besonders bevorzugte Ausführungsform des erfindungsgemäßen Systems ist dadurch gekennzeichnet, dass der Wasserzuführungseingang der Dosieranlage und/oder der Wasserabführungsausgang der Dosieranlage und/oder der Wassereingang der Verteileinrichtung und/oder zumindest ein Wasserabgang, vorzugsweise die Wasserabgänge, der Verteileinrichtung jeweils zumindest eine Absperrvorrichtung aufweist/aufweisen. Bei der Absperrvorrichtung handelt es sich gemäß bevorzugter Ausführungsform um zumindest einen Absperrschieber. Durch die Absperrvorrichtungen bzw. die Absperrschieber kann der Wasserdurchfluss durch die einzelnen Komponenten bzw. durch die Ein-und/oderAusgänge sehr funktionssicher gesteuert und/oder geregelt werden.

Es ist ganz besonders bevorzugt, dass das System zumindest eine weitere bzw. dritte Moduleinheitaufweist, die als Schlauch-Moduleinheit ausgebildet ist, wobei die Schlauch-Moduleinheit vorzugsweise zumindest einen, bevorzugt zumindest zwei, sehr bevorzugt zumindest drei, besonders bevorzugt zumindest vier, Verteilelemente, insbesondere Verteilschläuche, für Wasser aufweist und wobei die Verteilelemente, insbesondere die Verteilschläuche, bevorzugt auf der Schlauch-Moduleinheit vorgehalten werden und sehr bevorzugt an die Wasserabgänge der Verteileinrichtung anschließbar sind. Es ist möglich, dass die Schlauch-Moduleinheit zumindest fünf, insbesondere zumindest sechs, Verteilelemente, insbesondere Verteilschläuche, aufweist bzw. vorhält.

Mittels der Schlauch-Moduleinheit lassen sich somit Verteilelemente, insbesondere Verteilschläuche, für das erfindungsgemäße System zum Einsatzort transportieren und auf der Schlauch-Moduleinheit bzw. auf dem Transportgestell der Schlauch-Moduleinheit vorhalten. Es ist somit bevorzugt, dass auch die Schlauch-Moduleinheit eine mobile Moduleinheit ist. Es ist weiterhin bevorzugt, dass auch die Schlauch-Moduleinheit ein Transportgestell aufweist, in dem die Komponenten der Schlauch-Moduleinheit angeordnet sind. Gemäß besonders bevorzugter Ausführungsform sind die Verteilelemente, insbesondere die Verteilschläuche, an die Wasserabgänge der Verteileinrichtung der Verteil-Moduleinheitanschließbar. Die auf der Schlauch-Moduleinheit bevorzugt vorgehaltenen Verteilelemente, insbesondere die Verteilschläuche, können somit sehreinfach und funktionssicher zum Einsatzort transportiert werden und dort mit den Wasserabgängen der Verteileinrichtung der Verteil-Moduleinheit verbunden werden. Auf diese Weise kann das in der Dosieranlage der Dosier-Moduleinheit behandelte Wasser und in der Verteileinrichtung der Verteil-Moduleinheit verteilte Wasser durch die Verteilelemente bzw. Verteilschläuche weiter verteilt werden, beispielsweise zu Verbrauchern und/oder zu weiteren Verteil-Moduleinheiten und/oder es können Abfüllstationen geschaffen werden, an denen mittels der Verteilschläuche das Wasser in Transportfahrzeuge abgefüllt werden kann.

Es ist weiter bevorzugt, dass das System zumindest eine weitere bzw. vierte Moduleinheit aufweist, die als Stromversorgungs-Moduleinheit ausgebildet ist und dass die Stromversorgungs-Moduleinheit vorzugsweise zumindest einen Stromgenerator aufweist. Bevorzugt ist auch die Stromversorgungs-Moduleinheit eine mobile Moduleinheit und sehr bevorzugt weist auch die Stromversorgungs-Moduleinheit ein Transportgestell auf, in dem die Komponenten der Stromversorgungs-Moduleinheit angeordnet sind. Die Stromversorgungs-Moduleinheit bzw. der Stromgenerator der Stromversorgungs-Moduleinheit ist bevorzugt mit den Komponenten bzw. Moduleinheiten des erfindungsgemäßen Systems verbindbar, die Strom benötigen, beispielsweise mit Pumpen und/oder Steuerungsmodulen und dergleichen. Gemäß einer ganz besonders bevorzugten Ausführungsform weist die Stromversorgungs-Moduleinheitzumindestein Solarpaneel auf, das vorzugsweise Energie für den Stromgenerator zur Stromerzeugung zur Verfügung stellt. Die Stromversorgungs-Moduleinheit ermöglicht insbesondere eine zuverlässige Stromversorgung bzw. Not-Stromversorgung des erfindungsgemäßen Systems. Darüber hinaus ist die Stromversorgungs-Moduleinheit aufgrund ihrer bevorzugten Anordnung in einem Transportgestell und ihrer Ausgestaltung als mobile Moduleinheit-insbesondere zusammen mitden übrigen Moduleinheiten - sehr flexibel einsetzbar und mit wenig Aufwand zum Einsatzort transportierbar.

Es ist sehr bevorzugt, dass das System zumindest eine weitere bzw. fünfte Moduleinheit aufweist, die als Zubehör-Moduleinheit ausgebildet ist und wobei die Zubehör-Moduleinheit vorzugsweise Werkzeuge und/oder Adapterstücke und/oder Reduktionsstücke und/oder Anschlusskabel und/oder Verbindungsstücke, insbesondere Rohrverbindungsstücke, aufweist. Gemäß bevorzugter Ausführungsform ist auch die Zubehör-Moduleinheit als mobile Moduleinheit ausgebildet und sehr bevorzugt weist auch die Zubehör-Moduleinheit ein Transportgestell auf, in dem die Komponenten der Zubehör-Moduleinheit angeordnet sind. In der Zubehör-Moduleinheit bzw. in dem Transportgestell der Zubehör-Moduleinheit können Zubehörteile, die für die Inbetriebnahme und/oder die Wartung des erfindungsgemäßen Systems benötigt werden, transportiert und vorgehalten werden. Die Zubehör-Moduleinheit kann dazu vorzugsweise Aufnahmebehälter, beispielsweise Aufnahmeboxen und/oder Aufnahmekörbe aufweisen. Mittels der Zubehör-Moduleinheitkönnen die für die Inbetriebnahme und/oder die Wartung des Systems erforderlichen zusätzlichen Komponenten sehr funktionssicher zum Einsatzort transportiert werden und zwar insbesondere zusammen mit den übrigen Moduleinheiten des Systems und am Einsatzortauch sehr einfach gehandhabt werden. Inbetriebnahme des Systems meint im Rahmen der Erfindung im Übrigen insbesondere die Versetzung des Systems in den Betriebszustand.

Eine besondersbevorzugte Ausführungsform des erfindungsgemäßen Systems ist dadurch gekennzeichnet, dass das System zumindest eine weitere bzw. sechste Moduleinheit aufweist, die als zweite Verteil-Moduleinheit ausgebildet ist und zumindest eine zweite Verteileinrichtung für das in der Dosieranlage behandelte Wasser aufweist, wobei die zweite Verteileinrichtung zumindest einen Wassereingang und zumindest einen, vorzugsweise zumindest zwei, bevorzugt zumindest drei, Wasserabgänge aufweist. Bevorzugt ist auch die zweite Verteil-Moduleinheit als mobile Moduleinheit ausgestaltet und sehr bevorzugt weist auch die zweite Verteil-Moduleinheit ein Transportgestell auf, in dem die Komponenten der Moduleinheit angeordnet sind. Die zweite Verteil-Moduleinheit ist insbesondere analog zu der (ersten) Verteil-Moduleinheit ausgestaltet. Es ist im Übrigen auch möglich, dass das System weitere Verteil-Moduleinheiten, beispielsweise eine dritte und/oder eine vierte und/oder eine fünfte, Verteil-Moduleinheit aufweist. Durch den Einsatz von zumindest zwei, beispielsweise von zumindest drei, insbesondere von zumindest vier, Verteil-Moduleinheiten kann das in der Dosieranlage behandelte Wasser weiter in verschiedene Wasserabgänge aufgeteilt werden, sodass eine Vielzahl von Verbrauchern mit Wasser versorgt werden kann und/oder eine Vielzahl von Abfüllstationen geschaffen werden kann.

Es ist sehr bevorzugt, dass ein Wasserabgang der Verteileinrichtung der Verteil-Moduleinheit mit dem Wassereingang der zweiten Verteileinrichtung der zweiten Verteil-Moduleinheit bzw. einer weiteren Verteil-Moduleinheit verbindbar ist und/oder wobei ein an der Verteileinrichtung der Verteil-Moduleinheit vorgesehener Wasserablauf mit dem Wassereingang der zweiten Verteileinrichtung der zweiten Verteil-Moduleinheit bzw. einer weiteren Verteil-Moduleinheit verbindbar ist. Gemäß einer bevorzugten Ausführungsform ist somit ein Wasserabgang der Verteileinrichtung der (ersten) Verteil-Moduleinheit mit dem Wassereingang der zweiten Verteileinrichtung der zweiten Verteil-Moduleinheit verbindbar. Auf diese Weise kann das aus einem Wasserabgang der Verteileinrichtung abgeführte Wasser in eine weitere Verteileinrichtung einer zweiten Verteil-Moduleinheit eingeführt und dort erneut aufgeteilt werden, beispielsweise auf zumindest zwei, bevorzugt auf zumindest drei Wasserabgänge. Zusätzlich oder alternativ ist es auch möglich, dass der Wassereingang der zweiten Verteileinrichtung der zweiten Verteil-Moduleinheit mit einem Wasserablauf der Verteileinrichtung der (ersten) Verteil-Moduleinheit verbunden wird. Bevorzugt ist die Verteileinrichtung der (ersten) Verteil-Moduleinheit bzw. der Verteil-Moduleinheiten jeweils derart ausgebildet, das in Wasserströmungsrichtung nach dem Wassereingang hintereinander zunächst die Wasserabgänge angeordnet sind. Die Wasserabgänge sind bevorzugt jeweils an eine Hauptleitung angeformt. Das Ende dieser Hauptleitung bildet gemäß bevorzugter Ausführungsform einen Wasserablauf. Dieser Wasserablauf weist gemäß bevorzugter Ausführungsform eine Absperrvorrichtung, vorzugsweise einen Absperrschieber auf. An den Wasserablauf kann beispielsweise eine weitere Verteil-Moduleinheit angeschlossen werden.

Es ist sehr bevorzugt, dass der Durchmesser des zumindest einen Wasserabganges der zweiten Verteileinrichtung der zweiten Verteil-Moduleinheit geringer ist als der Durchmesser des zumindest einen Wasserabganges der Verteileinrichtung der ersten Verteil-Moduleinheit. Dadurch wird erreicht, dass das in der Dosieranlage bzw. in der Dosier-Moduleinheit behandelte Wasser zunächst über die Wasserabgänge der Verteileinrichtung der (ersten) Verteil-Moduleinheit und vorzugsweise durch an die Wasserabgänge anschließbare Verteilelemente, insbesondere Verteilschläuche, mit großem Durchmesser verteilt wird und dann weiter verteilt wird mittels einer zweiten bzw. weiteren Verteileinrichtung, deren Wasserabgänge einen geringeren Durchmesser aufweisen. Dies trägt insbesondere dem durch die Weiterverteilung geringer werden Wasservolumen bzw. der geringer werdenden Wasserdurchflussmenge Rechnung.

Eine ganz besonders bevorzugte Ausführungsform der Erfindung ist dadurch gekennzeichnet, dass die Dosieranlage zumindest eine Messeinrichtung zur Messung der durchströmenden Wassermenge aufweist und dass dem durchströmenden Wasser eine von der gemessenen Wassermenge abhängige Menge des Dosiermittels zudosierbar ist. Gemäß bevorzugter Ausführungsform ist die Messeinrichtung in Wasserströmungsrichtung nach der Zugabestelle für das Dosiermittel angeordnet. Es ist zusätzlich oder alternativ möglich, dass die Messeinrichtung in Wasserströmungsrichtung vor der Zugabestelle für das Dosiermittel angeordnet ist. Bei der Messeinrichtung handelt es sich gemäß bevorzugter Ausführungsform um einen Durchflussmesser. In Abhängigkeit von dem gemessenen Wasserdurchfluss wird dem Wasser in der Dosieranlage die benötigte Menge des Dosiermittels, beispielsweise des Desinfektionsmittels, zudosiert.

Es ist möglich, dass das erfindungsgemäße System zumindest zwei Dosier-Moduleinheiten aufweist. Zweckmäßigerweise ist die Dosieranlage jeder Dosier-Moduleinheitdann im Betriebszustand des Systems mit zumindest einer Verteileinrichtung einer Verteil-Moduleinheit verbunden, sodass bevorzugt auch zumindest zwei Verteil-Moduleinheiten vorgesehen sind.

Erfindungsgemäß weisen die Moduleinheiten jeweils ein Transportgestell auf, in dem die Komponenten derjeweiligen Moduleinheit angeordnet sind. Es ist sehr bevorzugt, dass die Komponenten der Moduleinheiten nicht aus den Transportgestellen herausragen, sodass die Moduleinheiten funktionssicher transportiert werden können und insbesondere auch funktionssicher gestapelt werden können. Zur Verbindung der einzelnen Moduleinheiten bzw. der Komponenten der Moduleinheiten, beispielsweise zur Verbindung der Dosieranlage der Dosier-Moduleinheit mit der Verteileinrichtung der Verteil-Moduleinheit sind entsprechende Verbindungsstücke vorgesehen, die am Einsatzort montiert werden können und die gemäß bevorzugter Ausführungsformin einer Zubehör-Moduleinheit vorgehalten werden.

Die Erfindung betrifft außerdem ein Verfahren zur Wasserverteilung, insbesondere zur Trinkwasserverteilung, mit einem erfindungsgemäßen System zur Wasserverteilung, insbesondere zur Trinkwasserverteilung. Das erfindungsgemäße Verfahren wird insbesondere zur notfallmäßigen Wasserversorgung, insbesondere zur notfallmäßigen Trinkwasserversorgung eingesetzt. Bevorzugt wird das erfindungsgemäße Verfahren an Wasserquellen wie Flüssen, Brunnen oder großen Speichern durchgeführt. Durch die zumindest eine Verteil-Moduleinheit, vorzugsweise durch den Einsatz mehrerer Verteil-Moduleinheiten, kann das in der zumindest einen Dosieranlage der zumindest einen Dosier-Moduleinheit behandelte Wasser bzw. Trinkwasser auf eine Vielzahl von Verbrauchern verteilt werden und/oder es kann eine Vielzahl von Abfüllstationen geschaffen werden, an denen beispielsweise Transportfahrzeuge mit dem Wasser befüllt werden können.

Der Erfindung liegt die Erkenntnis zugrunde, dass das erfindungsgemäße System zur Wasserverteilung, insbesondere zur Trinkwasserverteilung, sehr flexibel einsetzbar ist. Die Ausgestaltung des Systems aus mobilen Moduleinheiten, die sehr kompakt ausgebildet sind, erlaubt sowohl einen einfachen Transport zum Einsatzort als auch eine funktionssichere und einfache Handhabung der Moduleinheiten am Einsatzort. Hinzu kommt, dass das System aufgrund der modularen Ausbildung sehrflexibel an die einzelnen Gegebenheiten am Einsatzort angepasst werden kann, beispielsweise an die Art der Wasserquelle. Die bevorzugte Ausgestaltung der mobilen Moduleinheiten als stapelbare mobile Moduleinheiten führt zu einer weiteren Verbesserung der flexiblen Einsetzbarkeit und der funktionssicheren Transportierbarkeit und Handhabbarkeit am Einsatzort. Es ist weiterhin zu betonen, dass das erfindungsgemäße System wenig aufwendig ausgestaltet ist und daher auch sehr wirtschaftlich einsetzbar ist. Schließlich ist hervorzuheben, dass die Modularität und die Kompaktheit des Systems sowie die flexible Anpassbarkeit an die Gegebenheiten einen sehr kurzfristigen Einsatz und auch eine sehr kurzfristige Inbetriebnahme des Systems ermöglichen.

Nachfolgend wird die Erfindung anhand einer lediglich ein Ausführungsbeispiel darstellenden Zeichnung näher erläutert. Es zeigen in schematischer Darstellung:
- Fig. 1: ein erfindungsgemäßes System zur Wasserverteilung im Betriebszustand
- Fig. 2: ein erfindungsgemäßes System zur Wasserverteilung in gestapelter Anordnung
- Fig. 3: eine erfindungsgemäße Schlauch-Moduleinheit
- Fig. 4: eine erfindungsgemäße Stromversorgungs-Moduleinheit
- Fig. 5: ein Transportgestell der erfindungsgemäßen Moduleinheiten
- Fig. 6: ein Fließschema des erfindungsgemäßen Systems im Betriebszustand in einer ersten Ausführungsform
- Fig. 7: ein Fließschema des erfindungsgemäßen Systems im Betriebszustand in einer zweiten Ausführungsform

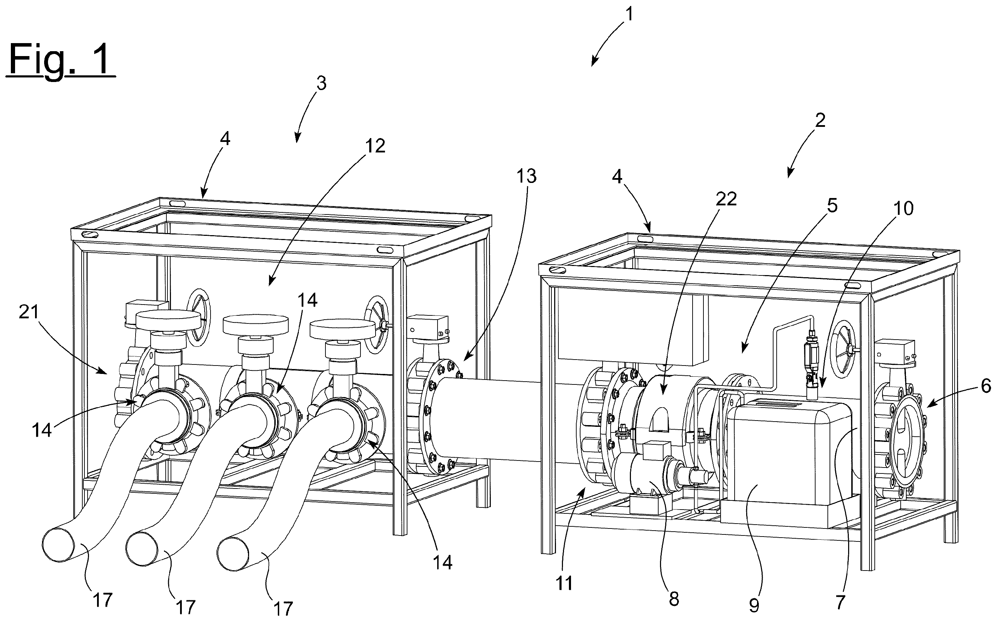

Die Figuren zeigen ein erfindungsgemäßes System 1 zur Wasserverteilung. Vorzugsweise und im Ausführungsbeispiel gemäß den Figuren handelt es sich dabei um ein System 1 zur Trinkwasserverteilung. Die Fig. 1 zeigt das erfindungsgemäße System 1 in einem Betriebszustand. Das System 1 weist erfindungsgemäß zumindest zwei mobile Moduleinheiten 2, 3 auf, die jeweils ein Transportgestell 4 aufweisen, wobei die Komponenten der Moduleinheiten 2, 3 jeweils in dem Transportgestell 4 angeordnet sind. Erfindungsgemäß ist eine erste Moduleinheit2 als Dosier-Moduleinheit 2 ausgebildet und weist eine Dosieranlage 5 für die Zufuhr von zumindest einem Dosiermittel zu Wasser auf, das die Dosieranlage 5 durchströmt. Bei dem Dosiermittel handelt es sich vorzugsweise und im Ausführungsbeispiel um ein Desinfektionsmittel und vorzugsweise enthält das Desinfektionsmittel zumindest eine aus der Gruppe Natriumhypochlorit, Calciumhypochlorit, Wasserstoffperoxid, Chlordioxid ausgewählte Verbindung.

Die Dosieranlage 5 der Dosier-Moduleinheit 2 weist erfindungsgemäß zumindest einen Wasserzuführungseingang 6, zumindest eine Wasserbehandlungsleitung 7, vorzugsweise und im Ausführungsbeispiel zumindest eine Dosierpumpe 8, zumindest einen Vorratsbehälter 9 für das Dosiermittel, zumindest eine Zugabestelle 10 für das Dosiermittel und zumindest einen Wasserabführungsausgang 11 auf. Der Wasserzuführungseingang 6 der Dosieranlage 5 ist vorzugsweise mit einer Wasserquelle verbunden, beispielsweise mit einem Fluss, einem Brunnen oderdergleichen. Das ist in den Figuren nicht näher dargestellt. Zur Förderung des Wassers ist zwischen dem Wasserzuführungseingang 6 der Dosieranlage 5 und der Wasserquelle bevorzugt eine Förderpumpe zwischengeschaltet.

Das durch den Wasserzuführungseingang 6 der Dosieranlage 5 einströmende Wasser wird zweckmäßigerweise und im Ausführungsbeispiel in der Wasserbehandlungsleitung 7 geführt und dort wird an der Zugabestelle 10 das - vorzugsweise und im Ausführungsbeispiel mittels der Dosierpumpe 8 aus dem Vorratsbehälter 9 geförderte - Dosiermittel zugeführt. Das in der Dosieranlage 5 behandelte Wasser verlässt dann vorzugsweise die Dosieranlage 5 über den Wasserabführungsausgang 11. Bevorzugt und im Ausführungsbeispiel gemäß den Figuren weist die Dosieranlage 5 außerdem eine Messeinrichtung 22 auf, die im Ausführungsbeispiel gemäß den Figuren und gemäß bevorzugter Ausführungsform als Durchflussmesser ausgestaltet ist. Die Messeinrichtung 22 bzw. der Durchflussmesser misst die durchströmende Wassermenge und dem durchströmenden Wasser ist eine von der gemessenen Wassermenge abhängige Menge des Dosiermittels zu dosierbar. Die Dosieranlage 5 weist weiter bevorzugt und im Ausführungsbeispiel an der Zugabestelle 10 eine Zugabevorrichtung auf. Dabei kann es sich gemäß bevorzugter Ausführungsform um eine Zugabelanze handeln, die in den Wasserstrom hineinreicht.

Erfindungsgemäß weist das System eine zweite Moduleinheit 3 in Form einer Verteil-Moduleinheit 3 auf und diese Verteil-Moduleinheit 3 weist zumindest eine Verteileinrichtung 12 für das in der Dosieranlage 5 behandelte Wasser auf. Die Verteileinrichtung 12 weist erfindungsgemäß zumindest einen Wassereingang 13 auf. Mittels des Wassereinganges 13 wird das aus der Dosieranlage 5 austretende Wasser in die Verteileinrichtung 12 eingeführt. In dem Betriebszustand des Systems 1 sind dazu der Wasserabführungsausgang 11 der Dosieranlage 5 der Dosier-Moduleinheit 2 und der Wassereingang 13 der Verteileinrichtung 12 der Verteil-Moduleinheit 3 miteinander verbunden. Dazu kommt beispielsweise ein Rohrverbindungsstück zum Einsatz. Vorzugsweise und im Ausführungsbeispiel gemäß den Figuren weist die Verteileinrichtung 12 drei Wasserabgänge 14 auf. Mittels dieser Wasserabgänge 14 kann das in der Dosieranlage 5 behandelte Wasser verteilt werden, beispielsweise können damit Verbraucher versorgt werden und/oder es können Abfüllstationen geschaffen werden, an denen Transportfahrzeuge mit dem Wasser bzw. Trinkwasser befüllt werden können. Im Ausführungsbeispiel gemäß der Fig. 1 und gemäß bevorzugter Ausführungsform sind an die Wasserabgänge 14 der Verteileinrichtung 12 Verteilschläuche 17 angeschlossen.

Sehr bevorzugt und im Ausführungsbeispiel gemäß den Figuren weist der Wasserzuführungseingang 6 der Dosieranlage 5 und der Wasserabführungsausgang 11 der Dosieranlage 5 und der Wassereingang 13 der Verteileinrichtung 12 und die Wasserabgänge 14 der Verteileinrichtung 12 jeweils eine Absperrvorrichtung auf, die ganz besonders bevorzugt und im Ausführungsbeispiel jeweils als Absperrschieber ausgebildet ist. Gemäß bevorzugter Ausführungsform und im Ausführungsbeispiel weist die Verteileinrichtung 12 der Verteil-Moduleinheit3 außerdem einen in Wasserströmungsrichtung hinter den Wasserabgängen 14 angeordneten Wasserablauf 21 auf, der sehr bevorzugt und im Ausführungsbeispiel ebenfalls mit einer Absperrvorrichtung in Form eines Absperrschiebers versehen ist. An den Wasserablauf 21 kann gemäß einer bevorzugten Ausführungsform eine zweite Verteil-Moduleinheit3' bzw. eine zweite Verteileinrichtung 12' angeschlossen werden. Das wird unten stehend noch näher erläutert.

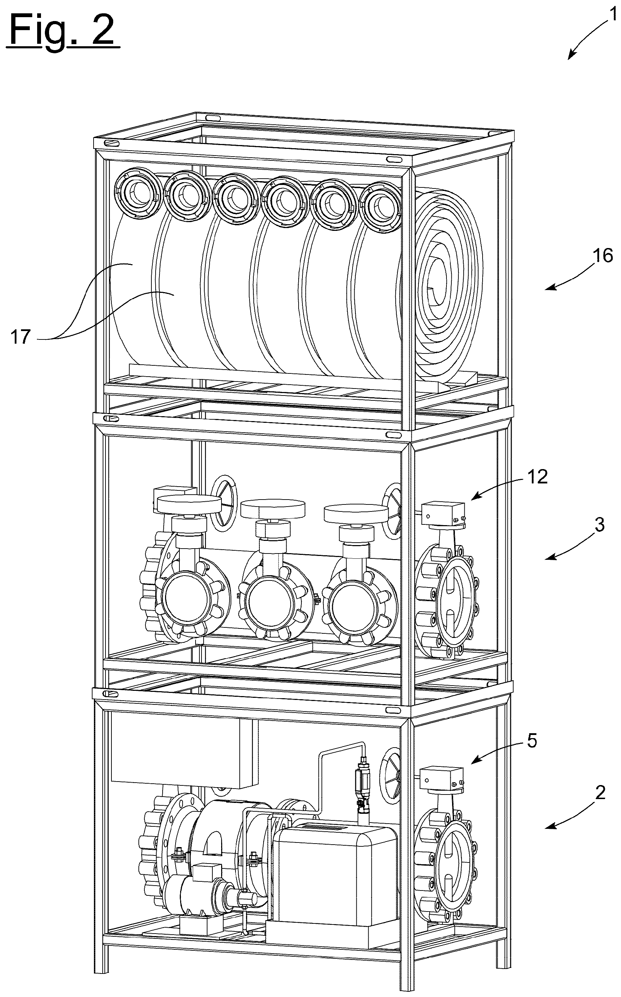

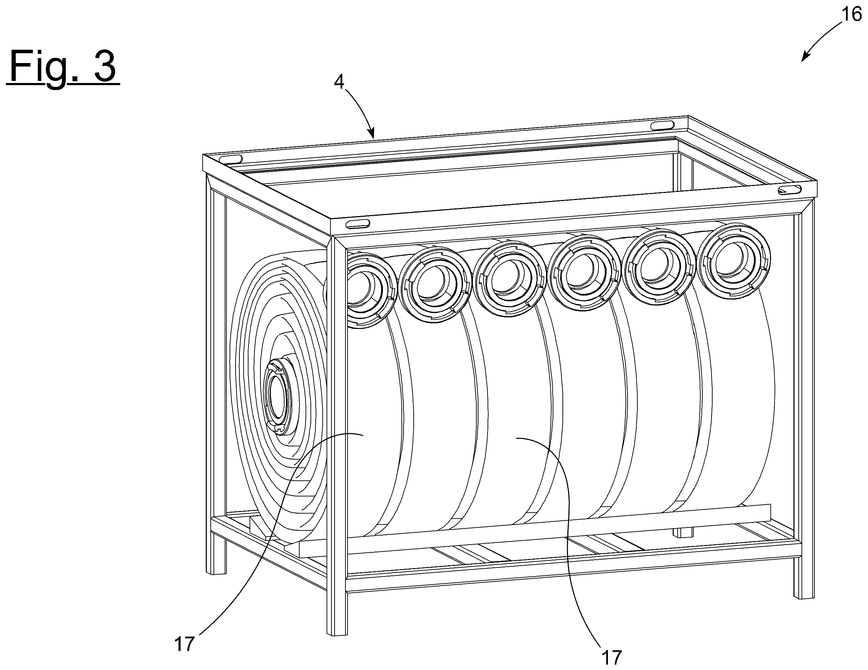

Die Moduleinheiten des erfindungsgemäßen Systems 1 zur Wasserverteilung sind erfindungsgemäß als mobile Moduleinheiten ausgebildet. Sie weisen jeweils ein Transportgestell 4 auf, in dem die Komponenten der jeweiligen Moduleinheitangeordnetsind. Es ist sehr bevorzugt, dass die Transportgestelle 4 der Moduleinheiten des erfindungsgemäßen Systems 1 stapelbar sind. In der Fig. 2 ist eine bevorzugte Ausführungsform des Systems 1 mit drei Moduleinheiten 2, 3, 16 dargestellt, wobei die Moduleinheiten 2, 3, 16 übereinander gestapelt sind. In diesem Zustand befindet sich das System nicht im Betriebszustand, sondern in einem gestapelten Zustand, in dem die einzelnen Moduleinheiten 2, 3, 16 sehr funktionssicher und einfach transportiert und am Einsatzort gehandhabtwerden können, beispielsweise mit einem Gabelstapler. In der Fig. 2 ist eine gemäß sehr bevorzugter Ausführungsform des erfindungsgemäßen Systems 1 vorgesehene weitere bzw. dritte Moduleinheit 16 zu erkennen, die als Schlauch-Moduleinheit 16 ausgebildet ist und die in der Fig. 3 in vergrößerter Darstellung gezeigt ist. Die Schlauch-Moduleinheit 16 weist vorzugsweise zumindest zwei, bevorzugt zumindest drei, besonders bevorzugt zumindest vier, sehr bevorzugt zumindest fünf und ganz besonders bevorzugt und im Ausführungsbeispiel sechs Verteilelemente in Form von Verteilschläuchen 17 für Wasser auf, die vorzugsweise und im Ausführungsbeispiel auf der Schlauch-Moduleinheit 16 vorgehalten werden und weiter bevorzugt und im Ausführungsbeispiel an die Wasserabgänge 14 der Verteileinrichtung 12 der Verteil-Moduleinheit 3 anschließbar sind.

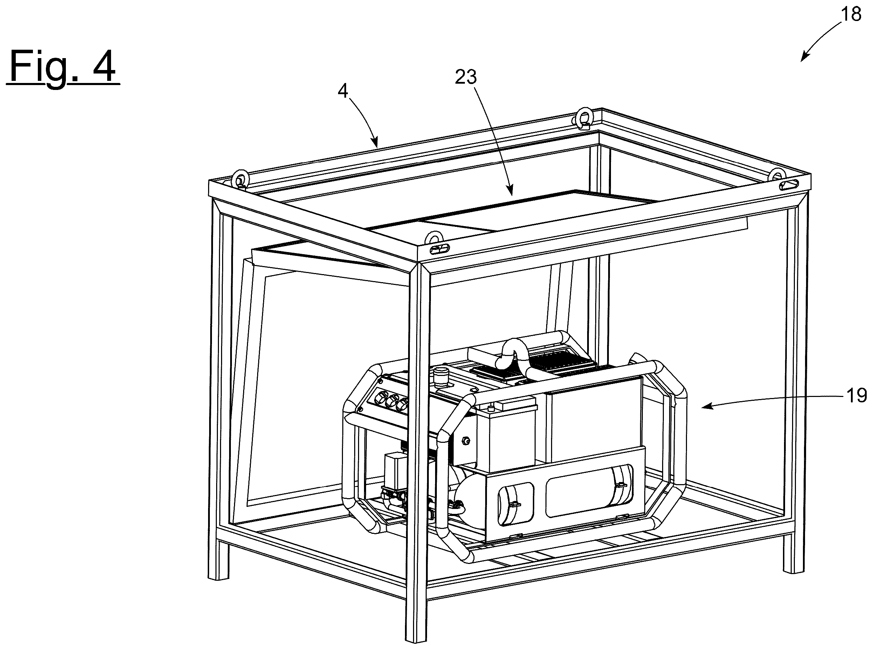

Die Fig. 4 zeigt eine gemäß einer bevorzugten Ausführungsform des erfindungsgemäßen Systems 1 vorgesehene weitere bzw. vierte Moduleinheit 18, die als Stromversorgungs-Moduleinheit 18 ausgebildet ist und wobei diese Stromversorgungs-Moduleinheit 18 vorzugsweise und im Ausführungsbeispiel gemäß der Fig. 4 einen Stromgenerator 19 aufweist. Die Stromversorgungs-Moduleinheit 18 weist gemäß weiter bevorzugter Ausführungsform und im Ausführungsbeispiel gemäß der Fig. 4 außerdem ein Solarpaneel 23 auf, das vorzugsweise Energie für den Stromgenerator 19 zur Stromerzeugung zur Verfügung stellt. Die Stromversorgungs-Moduleinheit 18 ermöglicht insbesondere eine zuverlässige Stromversorgung bzw. Not-Stromversorgung des erfindungsgemäßen Systems 1.

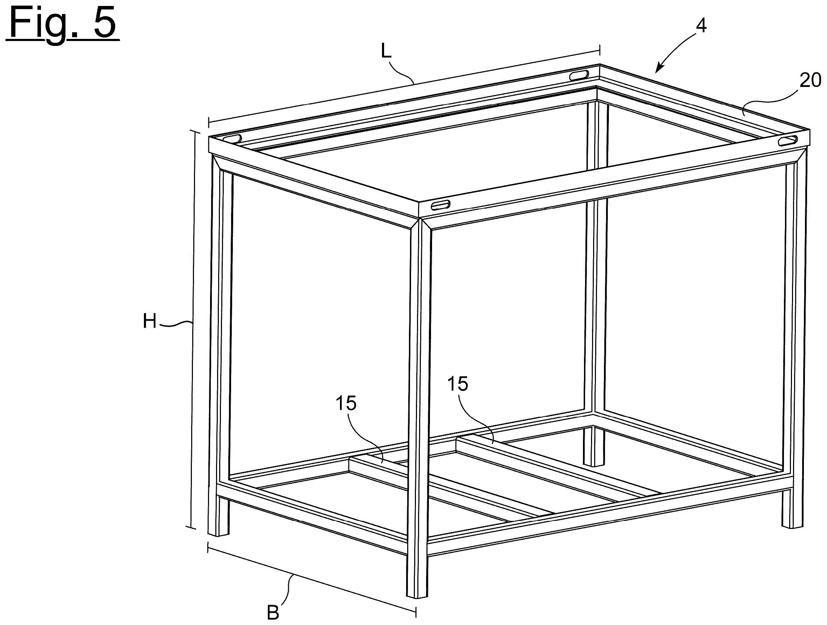

Die Fig. 5 zeigt ein Transportgestell 4 der erfindungsgemäßen Moduleinheiten. Das Transportgestell 4 ist bevorzugt und im Ausführungsbeispiel in der Draufsicht rechteckig ausgebildet und sehr bevorzugt und im Ausführungsbeispiel gemäß den Figuren weisen die Transportgestelle 4 der Moduleinheiten bzw. aller Moduleinheiten des Systems 1 jeweils die gleiche Höhe H bzw. im Wesentlichen die gleiche Höhe H und die gleiche Breite B bzw. im Wesentlichen die gleiche Breite B und die gleiche Länge L bzw. im Wesentlichen die gleiche Länge L auf. Länge L des Transportgestells 4 meint im Rahmen der Erfindung insbesondere die Erstreckung des Transportgestells 4 in seiner Längsrichtung. Breite B des Transportgestells 4 meint im Rahmen der Erfindung insbesondere die Erstreckung des Transportgestells 4 quer, insbesondere senkrecht bzw. im Wesentlichen senkrecht zu seiner Länge L bzw. zu seiner Erstreckung in Längsrichtung und vorzugsweise quer, insbesondere senkrecht bzw. im Wesentlichen senkrecht zu der Höhe H des Transportgestells 4. Höhe H des Transportgestells 4 meint im Rahmen der Erfindung insbesondere die Erstreckung des Transportgestells 4 quer, insbesondere senkrecht bzw. im Wesentlichen senkrecht zu dem Aufstelluntergrund, also insbesondere und im Ausführungsbeispiel in vertikaler Richtung. Das ist in der Fig. 5 zu erkennen.

Bevorzugt und im Ausführungsbeispiel gemäß der Fig. 5 weist das Transportgestell 4 vier sich vertikal bzw. im Wesentlichen vertikal erstreckende Eckpfosten auf und sehr bevorzugt und im Ausführungsbeispiel sind diese Eckpfosten in dem dem Aufstelluntergrund zugeordneten unteren Abschnitt des Transportgestells durch zwei Längsstreben, die sich in Längsrichtung erstrecken und durch zwei Querstreben, die sich in Breitenrichtung erstrecken, miteinander verbunden. Darüber hinaus sind die Eckpfosten gemäß bevorzugter Ausführungsform und im Ausführungsbeispiel in einem oberen Abschnitt des Transportgestells, insbesondere am oberen Ende des Transportgestells, durch zwei Längsstreben, die sich im Längsrichtung erstrecken und durch zwei Querstreben, die sich in Breitenrichtung erstrecken, miteinander verbunden, sodass sich gemäß bevorzugter Ausführungsform und im Ausführungsbeispiel zwei rechteckige Rahmen, die durch die Stützpfosten miteinanderverbunden sind, ergeben. Die Enden der vier Stützpfosten können zur Stapelung der Transportgestelle 4 auf dem oberen rechteckigen Rahmen eines weiteren Transportgestells 4 aufgestellt werden, wie etwa in der Fig. 2 zu erkennen ist. Auf dem oberen Rechteckrahmen ist dazu bevorzugt und im Ausführungsbeispiel zumindest eine Halteumrandung 20 angeordnet.

Bevorzugt und im Ausführungsbeispiel gemäß den Figuren weisen die Transportgestelle 4 des Systems 1 zwei Befestigungsstreben 15 für die Befestigung der Komponenten der zugeordneten Moduleinheit auf. Das ist beispielsweise in der Fig. 5 zu erkennen. Die Befestigungsstreben 15 erstrecken sich bevorzugt und im Ausführungsbeispiel in Horizontalrichtung und sind weiter bevorzugt und im Ausführungsbeispiel in einem dem Aufstelluntergrund zugeordneten unteren Abschnitt des Transportgestells 4 angeordnet. Im Ausführungsbeispiel gemäß der Fig. 5 verbinden die Befestigungsstreben 15 die beiden Längsstreben im unteren Abschnitt des Transportgestells 4 bzw. des unteren Rechteckrahmens des Transportgestells. Mit dem Ausdruck unterer Abschnitt des Transportgestells 4 bzw. oberer Abschnitt des Transportgestells 4 ist im Rahmen der Erfindung im Übrigen insbesondere ein Abschnitt gemeint, der sich auf einen Bereich zwischen 2 % und 30 %, bevorzugt zwischen 3 % und 20 %, sehr bevorzugt zwischen 5 % und 15 % der Höhe H ausgehend von dem unteren bzw. dem oberen Ende des Transportgestells 4 bezieht.

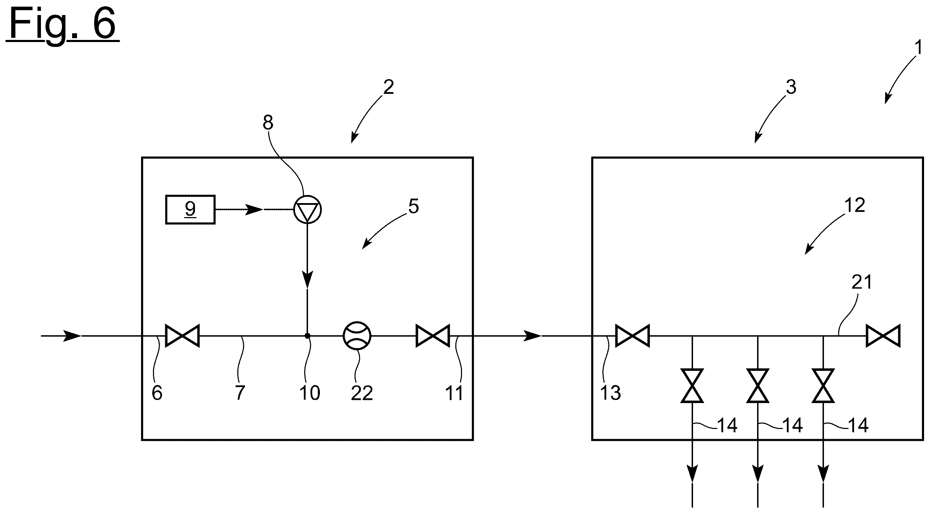

Die Fig. 6 zeigt ein Fließschema des erfindungsgemäßen Systems 1 im Betriebszustand. Aus einer Wasserquelle zugeführtes Wasser bzw. Trinkwasser wird erfindungsgemäß durch den Wasserzuführungseingang 6 der Dosieranlage 5 der Dosier-Moduleinheit2 in die Dosieranlage 5 eingeführt und an einer Zugabestelle 10 in der Wasserbehandlungsleitung 7 der Dosieranlage 5 wird dem Wasser, das die Dosieranlage 5 durchströmt, ein Dosiermittel bzw. Desinfektionsmittel zugeführt. In Wasserströmungsrichtung ist der Zugabestelle 10 bevorzugt und im Ausführungsbeispiel eine Messeinrichtung 22 in Form eines Durchflussmessers nachgeschaltet und dem durchströmenden Wasser ist vorzugsweise eine von der gemessenen Wassermenge abhängige Menge des Dosiermittels bzw. des Desinfektionsmittels zudosierbar.

Die Dosieranlage 5 der Dosier-Moduleinheit 2 weist außerdem einen Vorratsbehälter9 für das Dosiermittel und bevorzugt und im Ausführungsbeispiel eine Dosierpumpe 8 auf, die das Dosiermittel aus dem Vorratsbehälter 9 zu der Zugabestelle 10 fördert. Der Wasserzuführungseingang 6 und der Wasserabführungsausgang 11 weisen bevorzugt und im Ausführungsbeispiel jeweils eine Absperrvorrichtung in Form eines Absperrschiebers auf. Das in der Dosieranlage 5 der Dosier-Moduleinheit 2 behandelte Wasser strömt in die Verteileinrichtung 12 der Verteil-Moduleinheit 3 ein und zwar durch einen Wassereingang 13. In Wasserströmungsrichtung nach dem Wassereingang 13 weist die Verteileinrichtung 12 bzw. die Verteil-Moduleinheit 3 bevorzugt und im Ausführungsbeispiel gemäß der Fig. 6 drei Wasserabgänge 14 auf. Mittels dieser Wasserabgänge 14 wird das in der Dosieranlage 5 behandelte Wasser bzw. Trinkwasser in der Verteileinrichtung 12 verteilt. An die Wasserabgänge 14 können die Verteilelemente, beispielsweise die Verteilschläuche 17, angeschlossen werden.

Bevorzugt und im Ausführungsbeispiel gemäß der Fig. 6 weist der Wassereingang 13 der Verteileinrichtung 12 bzw. der Verteil-Moduleinheit 3 eine Absperrvorrichtung in Form eines Absperrschiebers auf und weisen auch die drei Wasserabgänge 14 Absperrvorrichtungen in Form von Absperrschiebern auf. Darüber hinaus weist die Verteileinrichtung 12 bzw. die Verteil-Moduleinheit 3 vorzugsweise um im Ausführungsbeispiel in Wasserströmungsrichtung hinter den Wasserabgängen 14 einen Wasserablauf 21 auf, der bevorzugt und im Ausführungsbeispiel ebenfalls mit einer Absperrvorrichtung bzw. mit einem Absperrschieber versehen ist. Das aus den Wasserabgängen 14 herausgeführte Wasser kann direkt zu Verbrauchern geleitet werden und/oder im Sinne einer Abfüllstation in Transportfahrzeuge gefüllt werden.

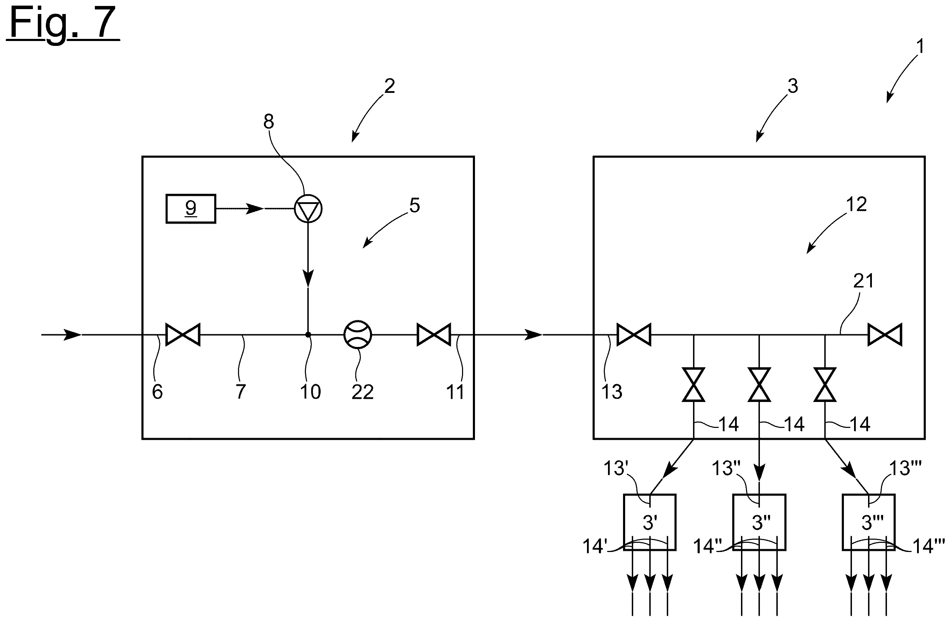

In der Fig. 7 ist ein Fließschema eines erfindungsgemäßen Systems 1 in einer weiteren Ausführungsform gezeigt, bei dem die Ausgestaltung der Dosier-Moduleinheit 2 und der Verteil-Moduleinheit 3 zunächst der Ausgestaltung gemäß Fig. 6 entspricht. Das System 1 der bevorzugten Ausführungsform gemäß Fig. 7 weist drei weitere Moduleinheiten 3', 3", 3‴ auf, die als weitere Verteil-Moduleinheiten 3', 3", 3‴ ausgebildet sind und jeweils einen Wassereingang 13', 13", 13‴ und bevorzugt und im Ausführungsbeispiel jeweils drei Wasserabgänge 14', 14", 14‴ aufweisen. Auf diese Weise kann das aus den Wasserabgängen 14 der (ersten) Verteileinrichtung 12 der Verteil-Moduleinheit 3 weiterverteilt bzw. aufgeteilt werden. Im Ausführungsbeispiel gemäß der Fig. 7 sind die weiteren Verteil-Moduleinheiten 3', 3", 3‴ an die Wasserabgänge 14 der Verteileinrichtung 12 der (ersten) Verteil-Moduleinheit 3 angeschlossen. Zusätzlich oder alternativ kann eine weitere Verteil-Moduleinheit aber auch an den Wasserablauf 21 der Verteileinrichtung 12 der (ersten) Verteil-Moduleinheit 3 angeschlossen werden.

## Patentansprüche

1. System zur Wasserverteilung, insbesondere zur Trinkwasserverteilung, wobei das System (1) zumindest zwei mobile Moduleinheiten (2, 3) aufweist, wobei die zumindest zwei Moduleinheiten (2, 3) jeweils ein Transportgestell (4) aufweisen, wobei die Komponenten der Moduleinheiten (2, 3) jeweils in dem Transportgestell (4) angeordnet sind,
wobei eine erste Moduleinheit (2) als Dosier-Moduleinheit (2) ausgebildet ist und zumindest eine Dosieranlage (5) für die Zufuhr von zumindest einem Dosiermittel zu Wasser aufweist, das die Dosieranlage (5) durchströmt, wobei die Dosieranlage (5) zumindest einen Wasserzuführungseingang (6), zumindest eine Wasserbehandlungsleitung (7), vorzugsweise zumindest eine Dosierpumpe (8), zumindest einen Vorratsbehälter (9) für das Dosiermittel, zumindest eine Zugabestelle (10) für das Dosiermittel und zumindest einen Wasserabführungsausgang (11) aufweist,
wobei eine zweite Moduleinheit (3) als Verteil-Moduleinheit (3) ausgebildet ist und zumindest eine Verteileinrichtung (12) für das in der Dosieranlage (5) behandelte Wasser aufweist, wobei die Verteileinrichtung (12) zumindest einen Wassereingang (13) und zumindest einen, vorzugsweise zumindest zwei, bevorzugt zumindest drei, Wasserabgänge (14) aufweist und wobei der Wasserabführungsausgang (11) der Dosieranlage (5) mit dem Wassereingang (13) der Verteileinrichtung (12) verbindbar ist.

2. System nach Anspruch 1, wobei das Dosiermittel ein Desinfektionsmittel ist und wobei das Dosiermittel bzw. das Desinfektionsmittel bevorzugt zumindest eine aus der Gruppe: "Natriumhypochlorit, Calciumhypochlorit, Wasserstoffperoxid, Chlordioxid" ausgewählte Verbindung enthält.

3. System nach einem der Ansprüche 1 oder 2, wobei die Transportgestelle (4) der zumindest zwei Moduleinheiten (2, 3) stapelbar sind.

4. System nach einem der Ansprüche 1 bis 3, wobei zumindest ein Transportgestell (4), vorzugweise die zumindest zwei bzw. alle Transportgestelle (4) des Systems (1), jeweils zumindest eine Befestigungsstrebe (15), vorzugsweise jeweils zumindest zwei Befestigungsstreben (15), für die Befestigung der Komponenten derzugeordneten Moduleinheit (2, 3) aufweist/aufweisen, wobei die zumindesteine Befestigungsstrebe (15) sich bevorzugt in Horizontalrichtung erstreckt und insbesondere in einem dem Aufstelluntergrund zugeordneten unteren Abschnitt des Transportgestells (4) angeordnet ist.

5. System nach einem der Ansprüche 1 bis 4, wobei der Wasserzuführungseingang (6) der Dosieranlage (5) und/oder der Wasserabführungsausgang (11) der Dosieranlage (5) und/oder der Wassereingang (13) der Verteileinrichtung (12) und/oder zumindest ein Wasserabgang (14), vorzugsweise die Wasserabgänge (14), der Verteileinrichtung (12) jeweils zumindest eine Absperrvorrichtung aufweist/aufweisen.

6. System nach einem der Ansprüche 1 bis 5, wobei das System (1) zumindest eine weitere bzw. dritte Moduleinheit (16) aufweist, die als Schlauch-Moduleinheit (16) ausgebildet ist, wobei die Schlauch-Moduleinheit (16) vorzugsweise zumindest einen, bevorzugt zumindest zwei, sehr bevorzugt zumindest drei, weiter bevorzugt zumindest vier, Verteilelemente, insbesondere Verteilschläuche (17), für Wasser aufweist und wobei die Verteilelemente, insbesondere die Verteilschläuche (17), bevorzugt auf der Schlauch-Moduleinheit (16) vorgehalten werden und sehr bevorzugt an die Wasserabgänge (14) der Verteileinrichtung (12) anschließbar sind.

7. System nach einem der Ansprüche 1 bis 6, wobei das System (1) zumindest eine weitere bzw. vierte Moduleinheit (18) aufweist, die als Stromversorgungs-Moduleinheit (18) ausgebildet ist und wobei die Stromversorgungs-Moduleinheit (18) vorzugsweise zumindest einen Stromgenerator (19) aufweist.

8. System nach einem der Ansprüche 1 bis 7, wobei das System (1) zumindest eine weitere bzw. fünfte Moduleinheit aufweist, die als Zubehör-Moduleinheit ausgebildet ist und wobei die Zubehör-Moduleinheit vorzugsweise Werkzeuge und/oder Adapterstücke und/oder Reduktionsstücke und/oder Anschlusskabel und/oderVerbindungsstücke, insbesondere Rohrverbindungsstücke, aufweist.

9. System nach einem der Ansprüche 1 bis 8, wobei das System zumindest eine weitere bzw. sechste Moduleinheit (3') aufweist, die als zweite Verteil-Moduleinheit (3') ausgebildet ist und zumindest eine zweite Verteileinrichtung (12') für das in der Dosieranlage (5) behandelte Wasser aufweist, wobei die zweite Verteileinrichtung (12') zumindest einen Wassereingang (13') und zumindest einen, vorzugsweise zumindest zwei, bevorzugt zumindest drei, Wasserabgänge (14') aufweist.

10. System nach Anspruch 9, wobei ein Wasserabgang (14) der Verteileinrichtung (12) der Verteil-Moduleinheit (3) mit dem Wassereingang (13') der zweiten Verteileinrichtung (12') der zweiten Verteil-Moduleinheit (3') bzw. einer weiteren Verteil-Moduleinheit (3') verbindbar ist und/oder wobei ein an der Verteileinrichtung (12) der Verteil-Moduleinheit (3) vorgesehener Wasserablauf (21) mit dem Wassereingang (13') der zweiten Verteileinrichtung (12') der zweiten Verteil-Moduleinheit (3') bzw. einer weiteren Verteil-Moduleinheit (3') verbindbar ist.

11. System nach einem der Ansprüche 9 oder 10, wobei der Durchmesser des zumindesteinen Wasserabganges (14')der zweiten Verteileinrichtung (12') der zweiten Verteil-Moduleinheit (3') geringer ist als der Durchmesser des zumindest einen Wasserabganges (14) der Verteileinrichtung (12) der Verteil-Moduleinheit (3).

12. System nach einem der Ansprüche 1 bis 11, wobei die Dosieranlage (5) zumindest eine Messeinrichtung (22) zur Messung der durchströmenden Wassermenge aufweistund wobei dem durchströmenden Wasser eine von der gemessenen Wassermenge abhängige Menge des Dosiermittels zudosierbar ist.

13. Verfahren zur Wasserverteilung, insbesondere zur Trinkwasserverteilung, mit einem System gemäß einem der Ansprüche 1 bis 12.

14. Verfahren nach Anspruch 13, wobei durch die zumindest eine Verteil-Moduleinheit (3), vorzugsweise durch den Einsatz mehrerer Verteil-Moduleinheiten (3, 3'), das in der zumindest einen Dosieranlage (5) der zumindest einen Dosier-Moduleinheit (2) behandelte Wasser, insbesondere Trinkwasser, auf eine Vielzahl von Verbrauchern verteilt wird und/oder eine Vielzahl von Abfüllstationen geschaffen wird, an denen vorzugsweise Transportfahrzeuge mit dem Wasser befüllt werden.

15. Verfahren nach einem der Ansprüche 13 oder 14, wobei das Verfahren zur notfallmäßigen Wasserversorgung, insbesondere zur notfallmäßigen Trinkwasserversorgung, eingesetzt wird und wobei das Verfahren bevorzugt an Wasserquellen, insbesondere an Flüssen, Brunnen oder großen Speichern, durchgeführt wird.
